Europäisches Patentamt

European Patent Office

Office européen des brevets

(19)

(11) **EP 0 992 090 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(21) Anmeldenummer: **99923445.3**

(22) Anmeldetag: **22.04.1999**

(51) Int Cl.[7]: **H01S 3/08**

(86) Internationale Anmeldenummer:
**PCT/EP99/02724**

(87) Internationale Veröffentlichungsnummer:
**WO 99/054970 (28.10.1999 Gazette 1999/43)**

(54) **RESONATORANORDNUNG FÜR FESTKÖRPERLASER**

RESONATOR ARRANGEMENT FOR SOLID-STATE LASERS

ENSEMBLE RESONATEUR POUR LASERS A L'ETAT SOLIDE

(84) Benannte Vertragsstaaten:
**AT DE ES FR GB IT**

(30) Priorität: **22.04.1998 DE 19817848**
**10.06.1998 DE 19825827**

(43) Veröffentlichungstag der Anmeldung:
**12.04.2000 Patentblatt 2000/15**

(73) Patentinhaber: **Carl Baasel Lasertechnik GmbH**
**D-82319 Starnberg (DE)**

(72) Erfinder:
• **LANGHANS, Lutz**
**D-82319 Starnberg (DE)**
• **RENNER, Thomas**
**D-81476 München (DE)**

(74) Vertreter: **Mörtel & Höfner**
**Patentanwälte**
**Blumenstrasse 1**
**90402 Nürnberg (DE)**

(56) Entgegenhaltungen:
**WO-A1-90/13157**     **CA-A- 1 164 990**
**US-A- 4 310 808**     **US-A- 5 692 005**

## Beschreibung

Technisches Gebiet und Stand der Technik

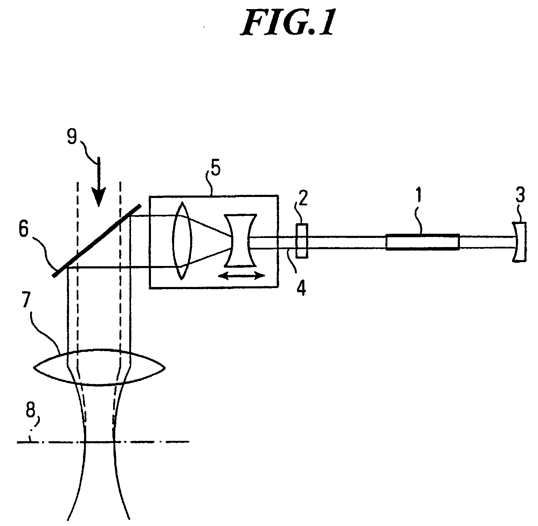

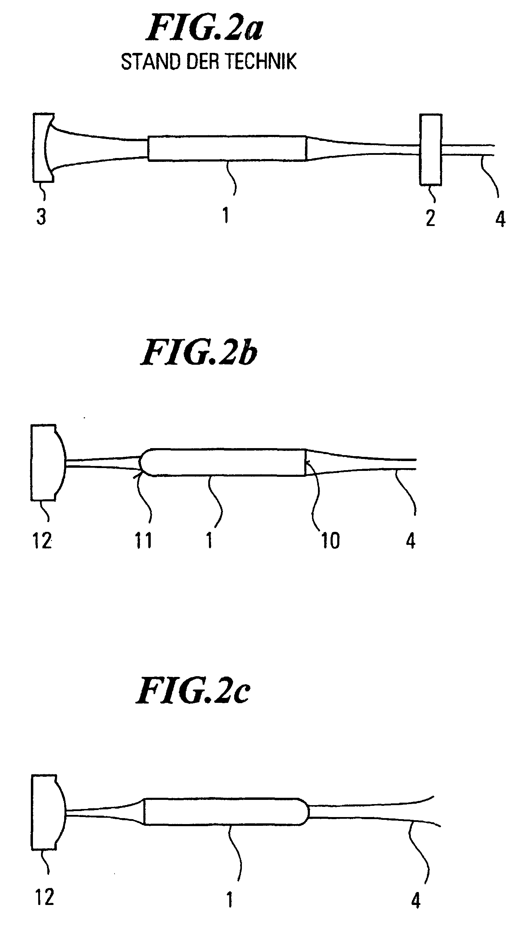

In den letzten Jahren haben vermehrt Nd:YAG Schweißlaser Einzug in den Schmuck- und Dentaltechnikbereich gehalten. Mit diesen sogenannten Handschweißlasern können präzise Punkt- und Nahtschweißungen im Sub-Millimeter Bereich durchgeführt werden. Neben dem Vorteil der lotfreien Verbindungen ist vor allem die thermische Schonung im Vergleich zur bisherigen Flammentechnik hervorzuheben. Alle marktüblichen Geräte haben einen typischen Aufbau, wie er in Abb. 1 dargestellt ist. Die dabei verwendeten üblichen "klassischen" Resonatoren sind zumeist so aufgebaut, wie in Abb. 2a zu erkennen, mit einem planen Auskoppelspiegel 2 und einem konkaven Rückspiegel 3. Der Nd:YAG Laserstab 1 sitzt ungefähr in der Mitte zwischen den Spiegeln 2 und 3.
Der ausgekoppelte Laserstrahl 4 wird über eine Strahlaufweitung 5 mit Divergenzverstellung, einen Umlenkspiegel 6 (zum Beispiel 1064 nm - HR, visuell -AR) und eine Fokussierlinse 7 in die Bearbeitungsebene 8 fokussiert.

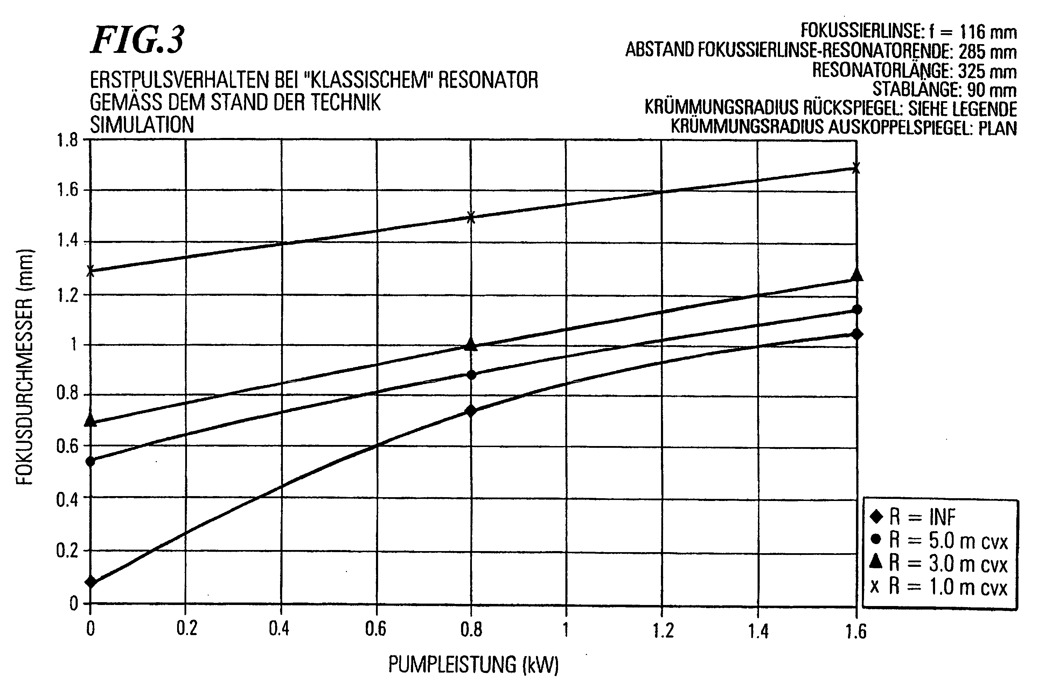

Alle Geräte haben mit dem Problem der "thermischen Linse" des Nd:YAG-Stabes und dem damit verbundenen "Erstpulsverhalten" zu kämpfen. Dieses Problem läßt sich auf die sogenannte thermische Linse im Nd:YAG-Stab zurückführen. Durch das Pumpen über eine Blitzlampe und die Wasserkühlung stellt sich im Nd:YAG-Stab ein radiales Temperaturprofil ein, welches sich über die charakteristische Materialkonstante dn/dT in ein Brechungsindexprofil und somit in eine Linsenwirkung transformiert. Abhängig von der bereits eingestrahlten Pumpenergie bzw. der Kühlung durch das Kühlwasser ist diese Linsenwirkung von der Pumpleistung abhängig. In Abb. 3 ist das Erstpulsverhalten beim "klassischen" Resonator gemäß dem Stand der Technik dargestellt als eine Simulation der Spotgröße im Fokus ohne Aufweitung in Abhängigkeit von der Pumpleistung, d.h. bei variierender thermischer Linse und für verschiedene Radien des Rückspiegels. Man erkennt deutlich das Ansteigen des Fokusdurchmessers mit steigender Pumpleistung. Kleinere Krümmungsradien des Rückspiegels führen zwar zu einer geringeren relativen Änderung, aber insgesamt zu größeren Werten des Fokusdurchmessers. Bei Einzelpulsen oder bei Erstpulsen (niedrige Pumpleistung) ist die Linsenwirkung noch gering, beim Dauerpulsen (hohe Pumpleistung) mit einer eingestellten Frequenz baut sich die Linse bis zu einem Wert auf, der von der mittleren Pumpleistung im Dauerbetrieb abhängt. Durch diese Linsenwirkung wird sowohl die Strahlqualität und somit die Spotgröße in der Bearbeitungsebene als auch (geringfügiger) die Pulsenergie beeinflußt. Für den Benutzer, dessen relevante Größe die Energiedichte, also die Pulsenergie dividiert durch die Spotgröße ist, stellt sich dieses Phänomen je nach Schweißvorgeschichte in stark varriierenden Schweißergebnissen dar.

Eine Möglichkeit, dieses Problem zu umgehen, besteht darin, den Laserstrahl durch eine hinreichend lange Glasfaser zu übertragen. Da die Glasfaser den Durchmesser des Strahls nicht konserviert, hat der ausgekoppelte Strahl in der Regel einen konstanten Durchmesser und eine nahezu konstante Divergenz. Allerdings wird durch diese Methode die Strahlqualität derart verschlechtert, daß die Fokussiereinheit entsprechend angepaßt werden muß und dadurch die sogenannte "Gutmütigkeit" des Schweißprozesses leidet, weil die Schärfentiefe in der Bearbeitungsebene geringer wird. Eine andere Möglichkeit besteht darin, eine stärkere Aufweitung vor dem Strahlteiler einzusetzen und außerhalb des Fokusbereichs in der Nähe der gleich groß bleibenden Abbildung der Staboberfläche zu arbeiten. Dadurch reduziert sich ebenfalls das Erstpulsverhalten. Allerdings verschlechtert sich gleichzeitig wieder die "Gutmütigkeit" (Schärfentiefe des Laserfokussystems in der Bearbeitungsebene).

In der Druckschrift MAGNI, V., et.al.: "Recent developments in laser resonator design" in Optical and Quantum Electronics 23, 1991, Seite 1105 - 1134, insbesondere Seite 1106, 2. Absatz, wird auf weitere Maßnahmen verwiesen, um bei stabilen Resonatoren dem Effekt der thermischen Linse entgegenzuwirken oder diesen zu kompensieren. Diese bekannten Maßnahmen sind jedoch nur bei einem bestimmten Wert der Pumpleistung wirksam.

Aus der US 4,310,808 A ist es bekannt, bei einem Festkörperlaser mit einem instabilen Resonator des positiven Zweigs den Effekt der thermischen Linse bei der Dimensionierung der fokussierenden Resonatorspiegel in der Weise zu berücksichtigen, dass sichergestellt ist, dass der Fokus des auf diese Weise entstehenden konfokalen Resonators außerhalb des Resonators liegt, um eine Zerstörung innerhalb des Resonators befindlicher optischer Komponenten zu vermeiden. Der Effekt der thermischen Linse wird bei diesem bekannten Laser nicht kompensiert sondern vielmehr ausgenutzt, um die Fokuslage zu beeinflussen.

Darstellung der Erfindung

Der Erfindung liegt die Aufgabe zugrunde, einen stabilen Resonator anzugeben, der nicht nur bei einem bestimmten Wert der Pumpleistung, sondern über einen größeren Bereich der Pumpleistung ohne negative Auswirkungen durch thermische Linseneffekte bleibt, der also insbesondere das Erstpulsverhalten bis unter die Nachweisgrenze des Benutzers reduziert und gleichzeitig die Gutmütigkeit, d.h. die Schärfentiefe des Lasers beibehält.

Die Lösung dieser Aufgabe erfolgt durch Resonatoren, wie sie in den nebengeordneten Patentansprüchen 1 und 5 angegeben sind. Die Anmelderin hat nämlich erkannt, daß durch den extrem asymmetrischen Aufbau der erfindungsgemäßen Resonatoren die Strahlqualität als Funktion der Pumpleistung ein vergleichsweise flaches Maximum auch bei im Gegensatz zum Stand der Technik relativ kurzen Resonatorlängen besitzt. Dadurch hat der Anwender über einen größeren Pumpleistungsbereich eine vergleichsweise konstante Strahlqualität. Im Ergebnis haben die thermischen Linseneffekte dann keine oder nur vernachlässigbare geringe Auswirkungen auf das Schweißergebnis; das Erstpulsverhalten ist vernachlässigbar gering. Während der Laserstab in den Ausführungsformen gemäß den Patentansprüchen 2, 3 und 6 vollständig auf die Auskoppelseite verschoben ist, können auch Ausführungsformen vorteilhaft sein, bei denen der Laserstab gemäß den Ansprüchen 4 und 7 in einem extrem kurzen Abstand zum Auskoppelspiegel angeordnet ist.

Nachfolgend soll die Erfindung anhand von Figuren und Diagrammen mit berechneten sowie gemessenen Werten näher erläutert werden. Es zeigen:

Fig. 1        Nd:YAG Schweißlaser gemäß dem Stand der Technik

Fig. 2a       klassicher Resonator gemäß dem Stand der Technik

Fig. 2b       erste Ausführungsform eines erfindungsgemäßen Resonators (sog. "Sweet-Spot"-Resonator I)

Fig. 2c       zweite Ausführungsform eines erfindungsgemäßen Resonators (sog. "Sweet-Spot"-Resonator II)

Fig. 3        Simulation des Erstpulsverhaltens bei einem klassischen Resonator gemäß dem Stand der Technik

Fig. 4        Fokusdurchmesser beim Stand der Technik (obere Kurve) und beim erfindungsgemäßen "Sweet-Spot"-Resonator (untere Kurve) als Funktion der Pumpleistung (Simulation)

Fig. 5        Fokusdurchmesser beim Stand der Technik (oberste Kurve) und beim erfindungsgemäßen "Sweet-Spot"-Resonator für verchiedene Laserstäbe (untere vier Kurven) als Funktion der Pumpleistung (Meßwerte)

Fig. 6        Strahlqualität M als Funktion der Pumpleistung im Multimodebetrieb für eine Resonatoranordnung mit L=650mm, R=unendlich, f=unendlich (Kurve 1) und f=1800mm (Kurve 2)

Gemäß Fig. 2b weist der erfindungsgemäße Resonator eine extrem asymmetrische Konfiguration auf. Der Laserstab 1 ist auf der Auskoppelseite plan und vollständig auf die Auskoppelseite verschoben, wo zum Auskoppeln des Laserstrahls 4 das plane Stabende mit einer teilreflektierenden Schicht 10 versehen ist.

Das andere Stabende 11 ist konvex gekrümmt und dient als Sammellinse im Resonator. Der Rückspiegel 12 ist ebenfalls konvex gekrümmt. Diese spezielle Anordnung der Komponenten führt bei entsprechender Auslegung der Resonatorlänge und der jeweiligen Krümmungsradien zu einem Resonator, der bei kurzer Baulänge einen kleinen Fokus erzeugt, welcher nahezu unabhängig von der Frequenz bzw. Pumpleistung ist. Eine mögliche Auslegung der Komponenten sieht dabei wie folgt aus:

Resonatorlänge: 290 mm
Krümmungsradius des Rückspiegels: 0.1 m Konvex (cvx)
Krümmungsradius Nd:YAG Stab: 0.22 m Konvex (cvx)
Länge des Nd:YAG Stabes: 90 mm

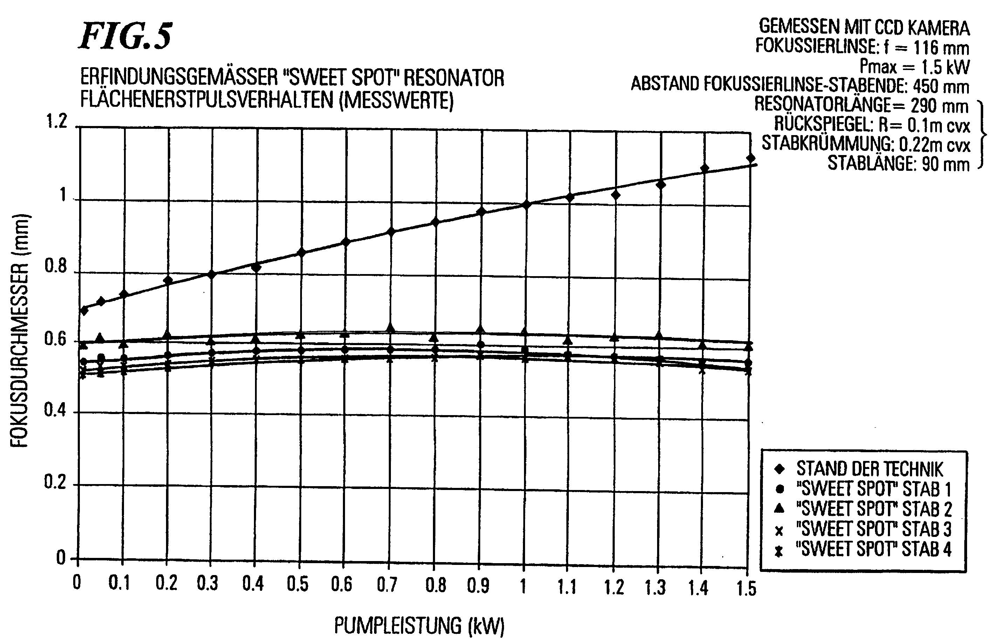

Auf diesen Resonator beziehen sich auch die in Fig. 5 vorgestellten Meßergebnisse.

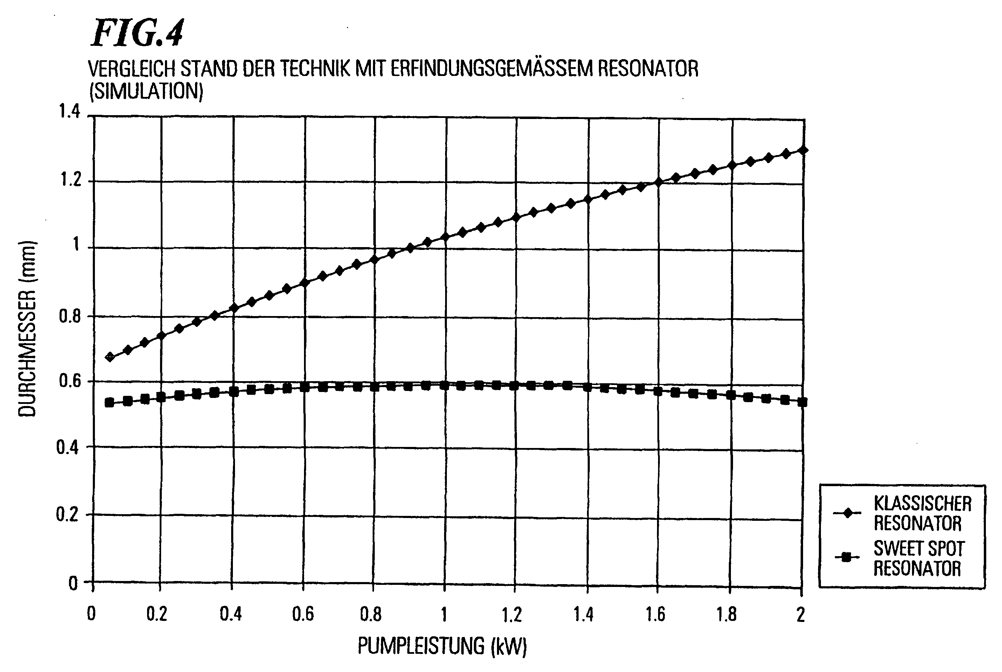

Fig. 4 zeigt zunächst den Vergleich eines "klassischen" Resonators (obere Kurve) mit dem neuen "sweet spot" Resonator gemäß Fig. 2b (untere Kurve) in der Simulation. Wie deutlich zu sehen ist, hat der "sweet spot" Resonator nicht nur einen nahezu konstanten Fokusdurchmesser, während beim "klassischen" Resonator der Fokusdurchmesser mit steigender Pumpleistung und damit zunehmender thermischer Linse zunimmt; der Fokusdurchmesser ist auch noch im gesamten Bereich deutlich kleiner. Diese gerechneten Ergebnisse werden bestätigt durch die Messungen in Abb. 5 (1 Stab beim "Stand der Technik", 4 verschiedene Stäbe beim erfindungsgemäßen "sweet spot" Resonator). Gemessen wurde mit einer CCD-Kamera; weitere Daten: Fokussierlinse mit f=116mm, Pmax=1,5 KW und Abstand Fokussierlinse zu Stabende=450mm.

Ähnliche Ergebnisse können mit leicht modifizierten Parametern (Krümmungsradien & Resonatorlänge) erzielt werden.

Das hervorzuhebende Merkmal ist, daß unter Verwendung von zwei konvex gekrümmten Radien (Rückspiegel & Stab) die Resonatorlänge bei den verwendeten Pumpleistungen auf einen Wert, der erheblich unter 500 mm liegt, reduziert werden kann.

Ausgehend von einem im Handel erhältlichen Rechenprogramm für Resonatoren und der der Anmelderin zuzuschreibenden Erkenntnis, daß gerade bei einem extrem asymmetrischen Resonator die thermischen Linseneffekte auch über einen größeren Pumpleistungsbereich ohne Einfluß auf das Schweißergebnis sind, können weitere Resonatorkonfigurationen wie folgt ermittelt werden.

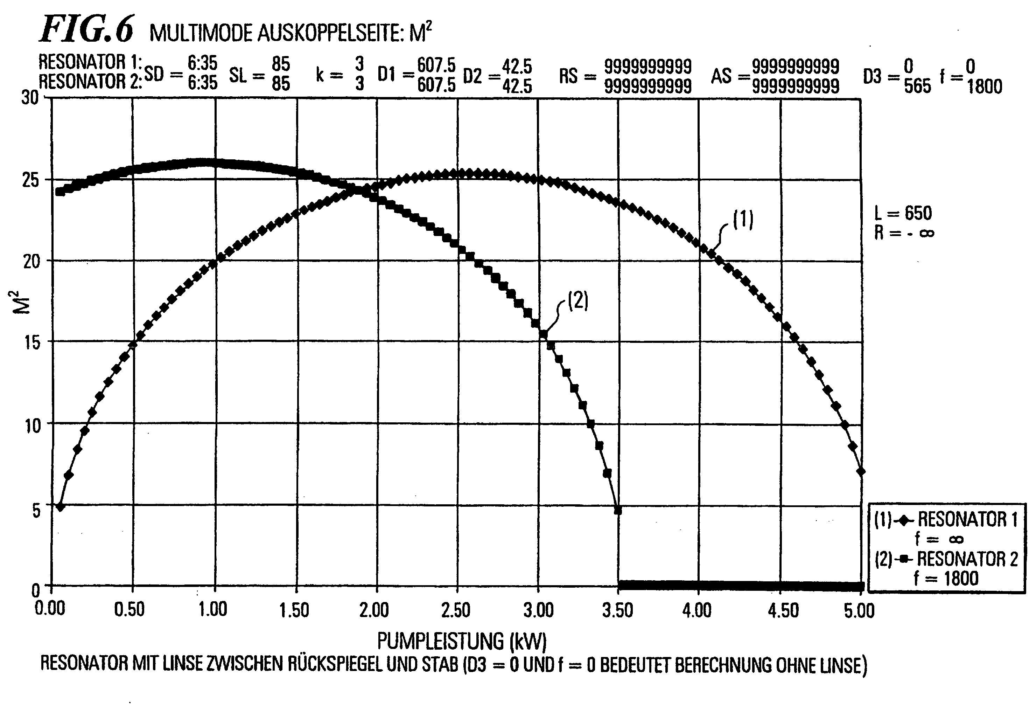

Mit dem Rechenprogramm für Resonatoren wird die Strahlqualität M2 in Abhängigkeit von der Pumpenergie berechnet und als Kurve ausgedruckt (Fig. 6). (Es soll sein: M2 = $M^2$)

1. Das Programm wird gestartet mit einem extrem asymmetrischen plan-plan-Resonator, d.h. der Laserstab ist nicht gekrümmt (entspricht einer internen Linse mit der Brennweite f= unendlich und die Krümmungsradien von Rückspiegel und Auskoppelspiegel sind jeweils Raunendlich; mit diesen Randbedingungen wird die Strahlqualität M2 in Abhängigkeit von der Pumpenergie für verschiedene Werte der Resonatorlänge L berechnet und durch Ausprobieren derjenige Wert von L (Lo) bestimmt, bei dem die Strahlqualität den gewünschten Maximumswert besitzt, (vorliegend soll der Maximumswert M2=25 sein, ein typischer Wert für Laserschweißanwendungen). Bei der Variation von L verändert sich die Lage des Maximums nicht, jedoch wird die Kurve nach oben ausgeweitet (für Werte L kleiner als Lo) oder nach unten zusammengestaucht (für Werte L größer als Lo).

2. Falls das Maximum der Strahlqualität M2 nicht in dem Bereich der Pumpleistung liegt, in dem die Anlage gemäß der anwendungsspezifischen Vorgabe betrieben werden soll, wie dies bei dem asymmetrischen plan-plan Resonator vorliegend der Fall ist, wird der Krümungsradius des Laserstabendes, das dem Rückspiegel zugewandt ist, variiert von plan, also R(Stab)=unendlich, zu endlichen Werten abnehmend. Anstelle des Krümmungsradius des Laserstabendes kann auch die durch die gekrümmte Fläche gebildete Linse zur Charakterisierung des Resonators herangezogen werden. Die Brennweite des gekrümmten Laserstabendes wird also von plan, d.h. f=unendlich zu endlichen Werten abnehmend variiert. Es werden also verschiedene f-Werte in das Rechenprogramm eingesetzt, wobei sich mit abnehmenden f-Werten das Maximum nach links zu kleineren Pumpleistungen verschiebt. Durch Ausprobieren wird der fo-Wert bestimmt, bei dem das Maximum der Kurve in der Mitte des gewünschten Pumpleistungsbereichs liegt, vorliegend also bei 1kW, Bereich 0 bis 2 kW.

3. Soll für denselben Wert von M2=25 ein kürzerer Resonator zr Anwendung kommen, um eine kompaktere Anlage zu erhalten (Regelfall), wird wie oben unter Punkt 1. für einen plan-plan Resonator, d.h. der Laserstab ist nicht gekrümmt (entspricht einer internen Linse mit der Brennweite f=unendlich) und die Krümmungsradien von Rückspiegel und Auskoppelspiegels sind unendlich, die Strahlqualität M2 in Abhängigkeit von der Pumpenergie berechnet. Da L nun kleiner als Lo ist, liegt das Maximum nun höher als M2=25 (siehe oben Punkt 1., letzter Satz). Nun verkleinert man den Radius R des Rückspiegels solange, bis das Maximum wieder bei 25 liegt.

4. Anschließend wird die Brennweite des gekrümmten Laserstabendes entsprechend Punkt 2. verkleinert, bis das Maximum wieder in der Mitte des gewünschten Pumpleistungsbereichs liegt, vorliegend also bei 1kW, Bereich 0 bis 2kW. Damit hat man einen neuen Resonator mit den geforderten Eigenschaften.

In der gleichen Weise kann man für M2=25 weitere Resonatoraufbauten ermitteln, indem man zu dem gewünschten L durch Anpassung von R das Maximum auf 25 einstellt und durch Variation von f die Lage des Maximums verschiebt. Entsprechend kann man für andere Werte von M2 und den gewünschten Resonatorlängen L die zugehörigen Werte von R und f bestimmen.

Nachfolgend sind einige Werte für einen erfindungsgemäßen "Sweet-Spot"-Resonator angegeben, wobei die Stablänge 85mm beträgt. Bei anderen Stablängen ergeben sich geringfügige Abweichungen.

| L (Länge des Resonators) mm | f (Brennweite der internen Linse) mm | R (Radius des Rückspiegels) mm |
|---|---|---|
| 650 | 1800 | - ∞ |
| 320 | 325 | -170 |
| 290 | 270 | -100 |
| 265 | 230 | - 85 |
| 215 | 155 | - 40 |

Man kann die Werte der Tabelle auch rein empirisch durch Formeln beschreiben:

$$R = \text{const} \times (L/Lo-L)^2$$

$$f = f_0 \times (L/Lo)^{2,4}$$

In einer zweiten Ausführungsform gemäß Fig. 2c ist der erfindungsgemäße "sweet spot" Resonator II so ausgestaltet, daß der Laserstab 1 auf seiner dem konvex gekrümmten Rückspiegel 12 zugewandten Seite plan ausgebildet ist und statt dessen auf der gegenüberliegenden Seite, also der Auskoppelseite, konvex gekrümmt und teilverspiegelt ist. Diese Ausgestaltung hat dieselben Vorteile wie der "sweet spot" Resonator I, der in Fig. 2b dargestellt ist. Bei entsprechender Auslegung der Resonatorlänge und der jeweiligen Krümmungsradien führt auch diese spezielle Anordnung der Komponenten zu einem Resonator, der bei kurzer Baulänge einen kleinen Fokus erzeugt, welcher nahezu unabhängig von der Frequenz bzw. Pumpleistung ist.

Nachfolgend sind einige Werte für einen erfindungsgemäßen "Sweet-spot"-Resonator II angegeben (Stablänge=85mm).

| L <br> (Länge des Resonators) mm | A <br> (Radius des Auskoppel Spiegels bzw. Stabendes) mm | R (Radius des Rückspiegels) mm |
|---|---|---|
| 650 | 2000 | - ∞ |
| 320 | 400 | -240 |
| 290 | 350 | -175 |
| 265 | 300 | -140 |
| 215 | 215 | - 70 |

Die Tabelle wurde wie beim "Sweet-spot"-Resonator I erstellt.

Mit einem handelsüblichen Rechenprogramm für Resonatoren wird die Strahlqualität M2 in Abhängigkeit von der Pumpenergie berechnet und als Kurve ausgedruckt.

1. Für einen plan-plan-Resonator mit A = ∞ wird die Länge Lo bestimmt, sodaß das maximale M2 einen vorgegebenen Wert annimmt (in diesem Fall M2=25).

2. Danach wird $A_0$ so bestimmt, daß das Maximum der Kurve in der Mitte des gewünschten Pumpleistungsbereiches liegt (in diesem Fall bei 1 kW, Bereich 0-2 kW).
Damit ist die erste Zeile vollständig.

Wenn man kürzere Resonatoren mit gleichen Eigenschaften haben will, geht man folgendermaßen vor:

3. Man berechnet die M2 Kurve für die Kürzere Länge L < Lo und erhält eine Kurve, deren Maximum höher liegt als 25. Dann verkleibert man R solange, bis das Maximum wieder bei 25 liegt.

4. Danach verkleinert man A solange, bis da Maximum wieder in der Mitte des gewünschten Bereiches liegt.
Damit hat man einen neuen Resonator mit den geforderten Eigenschaften. Auf diese Art kann man für jedes vorgegebene M2 und L die zugehörigen Werte von R und A bestimmen.

Man kann die Werte der Tabelle uach rein empirisch durch Formeln beschreiben:

$$R = C \times (L/Lo-L) \text{ exp. } 1,9 \qquad C=-254$$

$$A = A_0 \times (L/Lo) \text{ exp } 2,1$$

Anzumerken ist, daß die Pulsenergie ebenfalls nahezu unabhängig von der Vorgeschichte der Pumpleistung ist. Damit bleiben sowohl der Fokusdurchmesser als auch die Energiedichte konstant, was für den Anwender von zentralem Interesse ist.

Das bevorzugte Anwendungsgebiet der Erfindung sind Nd:YAG Schweißlaser mit einer Resonatorlänge kleiner 500 mm sowie einer maximalen Pumpdurchschnittsleistung bis 2 kW (entspricht etwa 60 W mittlerer Laserleistung).

**EP 0 992 090 B1**

Bezugszeichenliste

| | |
|---|---|
| 1 | Nd:YAG Laserstab |
| 2 | Auskoppelspiegel |
| 3 | Konkaver Rückspiegel |
| 4 | Laserstrahl |
| 5 | Strahlaufweitung mit Divergenzverstellung |
| 6 | Umlenkspiegel |
| 7 | Fokussierlinse |
| 8 | Schärfenebene der Beobachtung (Bearbeitungsebene) |
| 9 | Beobachtungsrichtung |
| 10 | teilreflektierende Sicht |
| 11 | konvex gekrümmtes Stabende |
| 12 | konvex gekrümmter Rückspiegel |

**Patentansprüche**

1. Stabiler Resonator für Festkörperlaser, die eine thermisch induzierte Linsenwirkung zeigen, mit einem Laserstab (1), einem Rückspiegel (12) und einem teilreflektierenden Auskoppelspiegel (2), **dadurch gekennzeichnet, daß** der Rückspiegel (12) konvex gekrümmt ist, daß das dem Rückspiegel (12), zugewandte Ende des Laserstabs ebenfalls konvex (11) gekrümmt ist und daß der Resonator einen asymmetrischen Aufbau derart aufweist, daß eine durch thermische Linseneffekte verursachte negative Auswirkung in einem größeren Bereich der Pumpleistung vermieden ist.

2. Resonator nach Anspruch 1, **dadurch gekennzeichnet, daß** der Auskoppelspiegel (2) von dem anderen Ende des Laserstabs (1) gebildet wird, wozu dieses Ende teilverspiegelt (10) ist.

3. Resonator nach Anspruch 2, **dadurch gekennzeichnet, daß** das teilverspiegelte Ende (10) des Laserstabs (1) eben ausgebildet ist.

4. Resonator nach Anspruch 1, **dadurch gekennzeichnet daß** der Auskoppelspiegel (2) in unmittelbarer Nähe zum Laserstabende angeordnet ist.

5. Stabiler Resonator für Festkörperlaser, die eine thermisch induzierte Linsenwirkung zeigen, mit einem Laserstab (1), einem Rückspiegel (12) und einem teilreflektierenden Auskoppelspiegel (2), **dadurch gekennzeichnet, daß** der Rückspiegel (12) konvex gekrümmt ist, daß das dem Rückspiegel (12) zugewandte Ende des Laserstabs (1) plan ist, daß das andere Ende des Laserstabs (1) konvex gekrümmt ist, und daß der Resonator einen asymmetrischen Aufbau derart auf weist, daß eine durch thermische Linseneffekte verursachte negative Auswirkung in einem größeren Bereich der Pumpleistung vermieden ist.

6. Resonator nach Anspruch 5, **dadurch gekennzeichnet, daß** der Auskoppelspiegel (2) von dem anderen Ende des Laserstabs (1) gebildet wird, wozu dieses Ende teilverspiegelt ist.

7. Resonator nach Anspruch 5, **dadurch gekennzeichnet, daß** der Auskoppelspiegel (2) in unmittelbarer Nähe zum Laserstabende angeordnet ist.

8. Resonator nach einem der Ansprüche 1 bis 7, **dadurch gekennzeichnet, daß** es sich bei dem Laserstab (1) um einen Nd:YAG-, Er:YAG-, Ho:YAG-, Nd:Glas-Stab handelt.

**Claims**

1. Stable resonator for solid-state lasers, which exhibit a thermally induced lens effect, having a laser rod (1), a reversing mirror (12) and a partially reflecting output mirror (2), **characterized in that** the reversing mirror (12) is convexly curved, **in that** the end of the laser rod facing the reversing mirror (12) is likewise convexly (11) curved, and **in that** the resonator has an asymmetric design such that a negative effect caused by thermal lens effects is avoided in a large range of the pump power.

2. Resonator according to Claim 1, **characterized in that** the output mirror (2) is formed by the other end of the laser rod (1), for which purpose this end is partially silvered (10).

3. Resonator according to Claim 2, **characterized in that** the partially silvered end (10) of the laser rod (1) is of planar design.

4. Resonator according to Claim 1, **characterized in that** the output mirror (2) is arranged in the immediate vicinity of the laser rod end.

5. Stable resonator for solid-state lasers which exhibit a thermally induced lens effect, having a laser rod (1), a reversing mirror (12) and a partially reflecting output mirror (2), **characterized in that** the reversing mirror (12) is convexly curved, **in that** the end of the laser rod facing the reversing mirror (12) is flat, **in that** the other end of the laser rod (1) is convexly curved, and **in that** the resonator has an asymmetric design such that a negative effect caused by thermal lens effects is avoided in a large range of the pump power.

6. Resonator according to Claim 5, **characterized in that** the output mirror (2) is formed by the other end of the laser rod (1) for which purpose this end is partially silvered.

7. Resonator according to Claim 5, **characterized in that** the output mirror (2) is arranged in the immediate vicinity of the laser rod end.

8. Resonator according to one of Claims 1 to 7, **characterized in that** the laser rod (1) is an Nd:YAG, Er:YAG, Ho: YAG or Nd:glass rod.

**Revendications**

1. Résonateur stable pour laser solide qui présente un effet de lentille induit thermiquement, comprenant un barreau (1) laser, un miroir (12) et un miroir (2) de découplage semi-réfléchissant, **caractérisé en ce** le miroir (12) est convexe, en ce que l'extrémité du barreau laser tournée vers le miroir '(12) est également convexe (11) et en ce que le résonateur a une structure dissymétrique de manière à éviter, dans une grande partie de la puissance de pompage, une action négative provoquée par des effets thermiques de lentille.

2. Résonateur suivant la revendication 1, **caractérisé en ce que** le miroir (2) de découplage est formé de l'autre extrémité du barreau (1) laser, cette extrémité étant, à cet effet, rendue semi-réfléchissante (10).

3. Résonateur suivant la revendication 2, **caractérisé en ce que** l'extrémité (10) rendue semi-réfléchissante du barreau (1) laser est plane.

4. Résonateur suivant la revendication 1, **caractérisé en ce que** le miroir (2) de découplage est placé à proximité immédiate de l'extrémité du barreau laser.

5. Résonateur stable pour laser solide qui présente un effet de lentille induit thermiquement comprenant un barreau (1) laser, un miroir (12) et un miroir (2) de découplage semi-réfléchissant, en ce que le miroir (12) est convexe, en ce que l'extrémité du barreau (1) laser tournée vers le miroir (12) est plane, en ce que l'autre extrémité du barreau (1) laser est convexe et en ce que le résonateur a une structure dissymétrique de manière à éviter, dans une grande partie de la puissance de pompage, une action négative provoquée par des effets thermiques de lentille.

6. Résonateur suivant la revendication 5, **caractérisé en ce que** le miroir (2) de découplage est formé de l'autre extrémité du barreau (1) laser, cette extrémité étant, à cet effet, rendue semi-réfléchissante.

7. Résonateur suivant la revendication 5, **caractérisé en ce que** l'extrémité (10) rendue semi-réfléchissante du barreau (1) laser est plane.

8. Résonateur suivant l'une des revendications 1 à 7, **caractérisé en ce que** le barreau (1) laser est un barreau en Nd : YAG, en Er : YAG, en Ho : YAG, en Nd : verre.

# FIG.1

# FIG.2a
## STAND DER TECHNIK

3   1   2   4

# FIG.2b

12   11   1   10   4

# FIG.2c

12   1   4

**FIG.3**

ERSTPULSVERHALTEN BEI "KLASSISCHEM" RESONATOR
GEMÄSS DEM STAND DER TECHNIK
SIMULATION

FOKUSSIERLINSE: f = 116 mm
ABSTAND FOKUSSIERLINSE-RESONATORENDE: 285 mm
RESONATORLÄNGE: 325 mm
STABLÄNGE: 90 mm
KRÜMMUNGSRADIUS RÜCKSPIEGEL: SIEHE LEGENDE
KRÜMMUNGSRADIUS AUSKOPPELSPIEGEL: PLAN

Legend:
- ◆ R = INF
- ● R = 5.0 m cvx
- ▲ R = 3.0 m cvx
- x R = 1.0 m cvx

Y-axis: FOKUSDURCHMESSER (mm)
X-axis: PUMPLEISTUNG (kW)

EP 0 992 090 B1

# FIG.4

VERGLEICH STAND DER TECHNIK MIT ERFINDUNGSGEMÄSSEM RESONATOR
(SIMULATION)

# FIG.5

ERFINDUNGSGEMÄSSER "SWEET SPOT" RESONATOR
FLÄCHENERSTPULSVERHALTEN (MESSWERTE)

GEMESSEN MIT CCD KAMERA
FOKUSSIERLINSE: f = 116 mm
Pmax = 1.5 kW
ABSTAND FOKUSSIERLINSE-STABENDE: 450 mm
RESONATORLÄNGE = 290 mm
RÜCKSPIEGEL: R = 0.1m cvx
STABKRÜMMUNG: 0.22m cvx
STABLÄNGE: 90 mm

Y-axis: FOKUSDURCHMESSER (mm)
X-axis: PUMPLEISTUNG (kW)

Legend:
- ◆ STAND DER TECHNIK
- ● "SWEET SPOT" STAB 1
- ▲ "SWEET SPOT" STAB 2
- ✕ "SWEET SPOT" STAB 3
- ✻ "SWEET SPOT" STAB 4

EP 0 992 090 B1

*FIG.6* MULTIMODE AUSKOPPELSEITE: M²

RESONATOR 1: $SD = \frac{6:35}{6:35}$ $SL = \frac{85}{85}$ $k = \frac{3}{3}$ $D1 = \frac{607.5}{607.5}$ $D2 = \frac{42.5}{42.5}$ $RS = \frac{9999999999}{9999999999}$ $AS = \frac{9999999999}{9999999999}$ $D3 = \frac{0}{565}$ $f = \frac{0}{1800}$
RESONATOR 2:

$L = 650$
$R = -\infty$

(1)

(2)

M²

PUMPLEISTUNG (kW)

| (1) | ◆ RESONATOR 1 |
| | $f = \infty$ |
| (2) | ■ RESONATOR 2 |
| | $f = 1800$ |

RESONATOR MIT LINSE ZWISCHEN RÜCKSPIEGEL UND STAB (D3 = 0 UND f = 0 BEDEUTET BERECHNUNG OHNE LINSE)